# EUROPEAN PATENT APPLICATION

(11) **EP 1 341 380 A1**
(43) Date of publication of application: **03.09.2003**
(21) Application number: 02075768.8
(22) Date of filing: 27.02.2002
(51) Int. Cl.: H04N 5/63

(54) **Power standby mode circuitry for audiovisual device**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

The problem of increased power consumption due to infrared remote control false alarm handling by a main TV controller (88) and power dissipation due to leakage current is addressed by fully delegating standby tasks to a low power delegate controller (90) with minimal local resources and having high performance and many dissipating system parts disabled. In low power standby mode the delegate controller (90) validates autonomously a remote control (42) command, a keypad (34) press, a timer alarm, and external interrupt etc. The TV system is powered up only when a command is valid. Use of a switched power supply voltage (70) reduces the leakage current problem.

## Description

This invention relates to power standby circuitry and to a method of achieving low power standby.

The ever-growing number of transistors per square millimeter allows larger and larger systems-on-chip (SoC) potentially working at ever increasing clock speed and power dissipation. Hence, power management is becoming an important issue.

State of the art power dissipation reduction methods for SoC allow individual modules to be shutdown by gating module clock when not used. Additional techniques for reducing power are the reduction of clock frequency, reducing power supply voltage (at the cost of slower circuitry), applying asynchronous circuits in module design, etc (see for example Neil H.E. Weste and Kamran Eshraghian, "Principles of CMOS VLSI Design - A Systems Perspective," 2^{nd} ed., Addison-Wesley, New York, 1993; Kees van Berkel and Martin Rem, "VLSI Programming of Asynchronous Circuits for Low Power", Nat.Lab. Unclassified Report No. UR 005/94, Philips Research, 1994; Kaushik Roy and Sharat C. Prasad, "Low-Power CMOS VLSI Circuit Design", John Wiley & Sons, Inc., New York, 2000).

Low-power standby mode is a special mode that has to be supported by power management schemes in for instance TV, VCR and digital TV set-top boxes. Legislation in Europe and Star compliance in the USA advise or require 3W power consumption in low-power standby mode (see for instance "Code of Conduct on Energy Efficiency of Digital TV Service Systems," Rev. 8, European Commission, Directorate-General Energy and Transport, New Energies & Demand Management, Promotion of Renewable Energy Sources & Demand Management, Brussels, Belgium, 28 February 2001). It is expected that legislation will decrease standby power consumption to less than 0.5W in the near future. Note that in state of the art TV systems, about 10 percent of the total power budget of low-power standby mode are given to a main controller IC like, for instance, the Television Control Processor (TCP) (see Ole Steinfatt, Peter Klapproth and Hans Tichelaar, "TCP: A Next Generation TV Control Processor", ICCE 1999, THPM 19.5, pp. 354-355, Los Angeles USA, June 1999).

In power standby mode, only a small subset of the system's functionality has to be active. For example, a TV system is supposed to wake up from, for instance, an appropriate command from the remote control, a key-pad press, an internal timer, a real-time clock, an external interrupt, etc. A digital TV set-top box (STB) and hybrid TV (capable of analog and digital TV standards reception) have additional requirements like for instance waking up from specific packets passing via the input transport stream. However, these additional requirements are only covered by a code of conduct and are defined as standby active/low mode dissipating less than 10W.

The standby power dissipation stays in general within the limits of the power budget when no external triggers are present and leakage current is negligible. The situation gets complicated when false triggers try to wake up the system. The instantaneous power consumption is raised because the system has to validate the alarm by its main controller. The power consumption can rise far above budget when false triggers are not taken away and the system keeps validating false alarms. Especially false alarm handling from infrared remote control is a problem as will be explained below in relation to the prior art.

Another fast upcoming problem is leakage current. Mainstream CMOS IC process technology is going below 0.18µm size structures, to lower threshold voltage transistors and lower power supply voltage. Power supply voltage is for instance 1.8V in the case of 0.18µm CMOS. Leakage current is becoming fast the dominant factor in one-chip TV IC power consumption at least during power standby mode (see Roy & Prasad above).

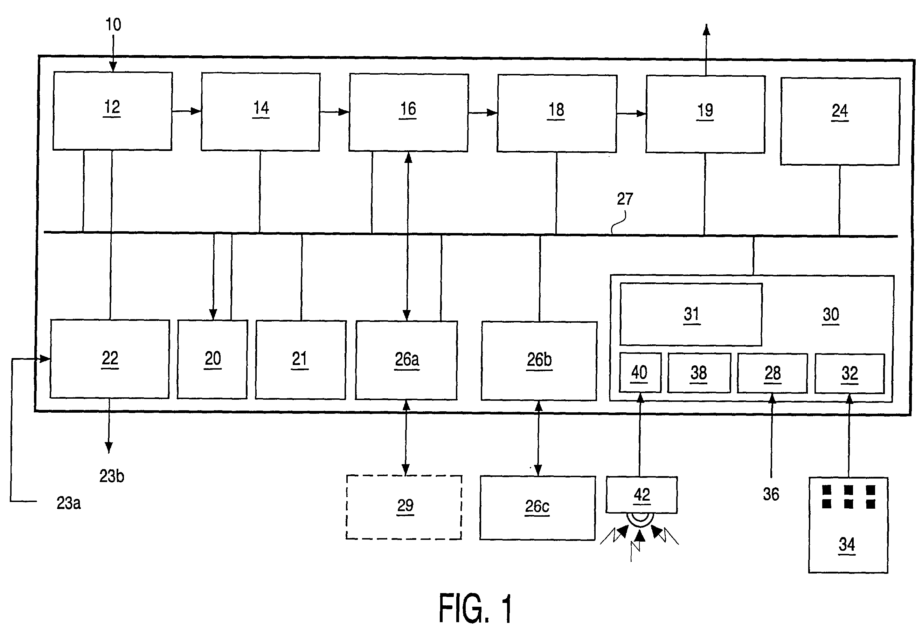

A simplified block diagram of a prior art state of the art one-chip TV is depicted by Fig. 1. In general, its functionality can be decomposed into video, audio and control processing. Input composite video 10 is first decoded 12 into component video, then put through a source selector 14, and followed by front-end features (histogram, noise measurements, etc). Thereafter, memory based features 16 are applied (picture-in-picture, double window, temporal noise reduction, scan-rate conversion, etc), followed by back-end features 18 (transient improvement, etc), and display adaptation functions 19, which part has a video output to a display (not shown). Input video is also directed to a teletext decoder module 20 for applying first teletext decoding functionality. Audio functionality is not decomposed in Fig. 1 for the sake of simplicity. An audio module 22 contains audio demodulation and decoding functionality, sound switching, and features processing (tone, volume, balance, etc), with input 23a and output 23b. The general infrastructure contains a micro-controller 24 for TV set control, one or more memory interfaces 26a, b (to flash memory, ROM or RAM 26c), a bus 27 and bus controller, graphics unit (not shown), interrupt controller 28, and peripherals 30. Among the controller peripherals, a software ADC 32 is shown for keypad decoding, an interrupt controller 28 for handling interrupts 36, a timer 38 for generating timer events, a remote control unit 40 for interfacing an infrared receiver 42 front-end, and power, clock and reset elements 31. Note that most prior art does not have a one-chip TV with an embedded micro-controller on the same die yet, (see JP 10336336, US 5953080, JP 2000059710, JP 2000209665). However, the Micronas VCT38xxA IC family claims it has. Other IC manufacturers have the micro-controller 24 in the same IC package - a Multi-Chip-Module (MCM) - or in an external IC. Let's focus on the remote control receiver functionality.

A state of the art infrared remote control receiver function for TV, VCR and set-top box consists of an infrared receiver front-end 42, pulse-width detector, optionally some buffering for time or pulse-width captures and command decoder. An example of infrared receiver front-end functionality is given by the U2538B from Temic Semiconductors, (U2538B, "IR receiver for data communication", Preliminary data sheet, Temic Semiconductors, 31^{st} May 1995). The infrared receiver 42 front-end takes care of converting infrared light into the electric domain, does pre- and gain- controlled amplification, 36kHz bandpass filtering, glitch removal, two-level slicing and outputs a two-level (binary) signal.

The output of the infrared receiver 42 is input into an on-chip pulse-width detector. The basis functionality of this detector is to measure time between edges on the binary input signal (delta time) and optionally the polarity of the edge (positive=rising or negative=falling). A basic implementation of such pulse-width detector is an edge triggered timer/counter and edge polarity register, which is generally referred to as capture timer. Note that this capture timer can be part of a micro-controller (µC) 24 like an 80C51, referred to above. Note that a capture timer can also be simulated by a timer 38 and an interrupt 28 on a micro-controller 24 like an 80C51. The value of the capture timer is read by the µC 24 when signalled by an edge detect interrupt and then first wakes up. Then the µC 24 takes care of the remote control command decoding. A valid command like channel key, on-key or standby key press results in leaving standby mode and entering another (operational) power mode. An invalid command results in status quo.

The problem regarding power consumption in standby mode is that in state of the art SoC the high performance main µC 24 and part of its general infrastructure is doing the task of infrared remote control command decoding. Consider the following example.

Let's assume the reception of infrared by a TV from a non-TV infrared remote control like VCR, audio set, or set-top box. It is obvious that such reception should result in false alarm detection after command decoding. Note that neither the infrared receiver front-end nor the capture timer 38 is capable of rejecting the false alarm. The µC 24 is interrupted for handling the capture timer's results. The µC 24 wakes up when sleeping (from non-triggered low-power standby mode), starts checking the cause of the interrupt, and then decides to start infrared remote control command decoding. Note that the main µC 24 needs additional (high performance) SoC resources for doing loads and stores of code and data like, for instance, cache, scratch-pad memory 21, maybe even external memory 29, internal bus 27, and the remote control unit 40. In the most optimal case the µC 24 runs the standby program from locked cache or internal scratch-pad memory 21 but still needs the internal bus 27 for access to for instance a capture timer 38 peripheral. The result is that still a significant part of the SoC's infrastructure and potentially a few external components are activated. The µC 24 detects a false alarm after a few tens to hundreds of milliseconds and decides to bring back the system into low-power standby mode. Note that during processing the false alarm, the power consumption can easily be tens to hundreds times the power consumption during (non-triggered) low-power standby. Some external power supplies allow for a short duration a considerable increase of power consumption but others don't. For instance, in some TV systems the Extra High Tension (EHT) generator has to be powered first in order to get additional power. It is obvious that this situation is unwanted every time someone pushes a VCR or audio remote control key.

The problem with standby power consumption gets worse when going to smaller mainstream CMOS process technology for SoC as already mentioned in the introduction. Leakage current is the additional problem. A state of the art solution is to tune the mainstream CMOS IC process for low leakage current at the cost of speed. However, there is no guarantee that this solution works for smaller sizes than 0.18µm and leakage current is still too large in low-power standby mode.

An object of the invention is to reduce standby power consumption. To this end, the invention provides low power standby circuitry as defined in claim 1. Advantageous embodiments are defined by the dependent claims.

According to a preferred embodiment of the present invention, low power standby circuitry for an audiovisual device incorporates signal reception means and a delegate micro-controller, wherein the standby circuitry is operable to receive and decode a signal received by the signal reception means, and wherein the delegate micro-controller is operable to control a voltage supply to at least part of a system-on-chip of the audiovisual device upon receipt of a validated signal, wherein said standby circuitry is adapted for use with a system-on-chip incorporating a main micro-controller for the audiovisual device.

The audiovisual device is preferably a TV, a VCR, a set-top box, DVD, and/or time-shift recorder. The audiovisual device is preferably a silicon chip controlled audiovisual device.

The delegate controller is preferably operable to control the supply of at least one clock signal to said at least part of the system-on-chip of the audiovisual device.

The provision of the delegate micro-controller operable to control either power or power and clock signals to at least part of the system-on-chip advantageously reduces power consumption in a standby mode. The provision of the delegate micro-controller as a separate micro-controller to a main micro-controller provides advantageous reduction of current leakage.

The received signal may be a remote control signal, which may be an IR signal.

The low power standby circuitry is preferably operable to maintain the audiovisual device in a standby condition and power up the audiovisual device on receipt of a validated signal.

The delegate micro-controller is preferably embedded in a system-on-chip of an audiovisual device. The low power standby circuitry preferably forms a part of the system-on-chip of the audiovisual device.

The delegate micro-controller is preferably adjacent, or close to, the main micro-controller of the system-on-chip. The delegate micro-controller may be a central processing unit (CPU) or a Digital Signal Processor (DSP).

The delegate micro-controller may be included on the same integrated circuit (IC) package as the main micro-controller, preferably on the same IC die.

The low power standby circuitry may be operable to reduce a frequency of a clock signal and/or switch and/or reduce a voltage of a voltage supply to the system-on-chip on entering a standby mode. The voltage supply reduction may be gradual.

The low power standby circuitry may be operable to enable or increase at least one clock frequency and/or increase or enable at least one voltage supply on ending a standby mode. The voltage supply increase may be gradual.

The low power standby circuitry is preferably operable to first reduce or disable a clock frequency before reducing or disabling at least one voltage supply on entering a standby mode.

The low power standby circuitry preferably receives input from at least one of the signal reception means, which may be IR signal reception means; timing means; and power supply means, which power supply means may be connected to power reset means.

The low power standby circuitry preferably has output connections to at least one of a main power supply means; horizontal drive circuit means of the audiovisual device; the main micro-controller; and/or a clock signal distribution means.

The delegate micro-controller is preferably located, in use, in a first voltage domain, separate to a second voltage domain for the main micro-controller of the system-on-chip.

According to a second aspect of the present invention a system-on-chip for an audiovisual device incorporates low power standby circuitry according to the first aspect.

The invention extends to an audiovisual device incorporating low power standby circuitry according to the first aspect. The invention extends to an extended TV system incorporating low power standby circuitry according to the first aspect.

Specific embodiments of the present invention will now be described by way of example and with reference to the accompanying drawings, in which:
Fig. 1 is a schematic diagram of a prior art one-chip TV system layout;
Fig. 2 is a schematic diagram of an extended TV system according to the invention;
Fig. 3 is a schematic diagram of an embedded micro-controller for a TV; and
Fig. 4 is a schematic diagram of the layout for a one-chip TV with on-chip delegate micro-controller for low-power standby modes.

Specific description in relation to the Figs. is given further below. The immediately following description is by way of introduction.

A solution for the infra red false alarm problem of temporarily, relatively strong increase of power consumption is a stepwise waking up by delegating low power standby tasks from a main micro-controller (µC) to a separate module. Hence, this separate module does at least the remote control command decoder task. The remote control command decoder task is preferably put on, or better, delegated to a low speed, (ultra) low-power and small but adequate "delegate" controller. This delegate controller is preferably a complex instruction set computer (CISC) like, for instance, an 80C51 because of its effective code packing (small code size) in comparison with RISC, see John L. Hennessy and David A Patterson, "Computer Architecture - A Quantitative Approach", 2^{nd} ed., Morgan Kaufmann Publ. Inc., San Franciso, 1996. The delegate controller communicates with the main µC and its infrastructure via preferably a very thin standard interface in order to keep the parallel execution of the remote control command decoder task simple and (ultra) low power. This can be achieved by giving the delegate µC its own minimal set of local resources. These are for instance local embedded memory for code and data, like FLASH (non-volatile) or RAM and ROM or OTP, local interrupt handling, local (capture) timer, and a thin (light weight) interface towards the main µC. This interface should be designed for crossing different supply voltage domains. An I²C interface would be an excellent choice. The delegate µC can have its own local power management control and is sleeping when the TV system is in low-power standby mode and no external triggers are present. An infrared false alarm is handled as follows.

Let's assume that the TV and thus its SoC is in low power standby mode. The clock is removed from the main µC and other modules except the capture timer and power management unit of the delegate µC. A non-TV remote control is activated (key-press), which obviously should result in false alarm detection. Its signal is received and fed to the input of the capture timer. The latter sends an interrupt to the delegate controller and its power management unit. The power management unit wakes up the delegate µC. The latter µC starts its remote control decoding task and checks whether the received command is valid and such that the TV should be powered up from low-power standby mode (for example, TV on-key pressed). The delegate µC detects after receiving a certain set of timing captures and command decoding thereon, a false alarm and goes back to low-power standby state. In this case, a false alarm will only wake up a low power controller with its own minimal infrastructure of a total of about 10k gates running at about 1 MHz. Power consumption can be as low as 4 mW (2.5 mW U2538B and 1 mW delegate controller) in 0.18 µm mainstream CMOS when handling false alarm.

A first solution focuses on an on-chip implementation of the delegate controller. The advantage of low power dissipation and low leakage current in low-power standby mode is obtained by implementation of the following measures:
1. The modules on the SoC that are not active in low-power standby mode are switched off by first deactivating functionality, then taking away the clocks, thereafter switching off clock PLLs when appropriate, and last taking away power supply voltage(s). Note that only the latter measure takes away leakage current.
2. Modules that are active in low-power standby mode are implemented preferably with high-Vₜₕ transistors or other techniques to reduce leakage current at the cost of performance degradation (additional delay in cells). This can be achieved by the application of CMOS process option like thick oxide (when supplied) at the expense of one additional process step (and mask). A further enhancement is the application of the dual-Vₜₕ concept (see Roy and Prasad above).
3. The delegate µC module is powered by preferably a reduced power supply voltage in order to decrease dynamic dissipation. Power supply voltage can be reduced because rather low speed signal processing and control is required.

The protocols for entering and leaving power standby mode are as follows. To enter standby mode: Optionally, deactivate functions or modules that are not used in power standby mode. Switch-off clock domains of modules inactive during standby. Switch-off clocks' PLLs when appropriate and desirable (slower start up). This is necessary when executing the next step. Switch off power supply voltages or activate logic cells' sleep mode in a dual Vₜₕ concept.

The return from standby mode is the inverse protocol of entering power standby mode: Switch-on power supply voltages or deactivate logic cells' sleep mode in a dual Vₜₕ concept. Switch on appropriate clocks' PLLs. Switch on clock domains of modules inactive during standby. Activate (finalize) appropriate modules.

Note that in power standby mode speed is not the issue. The delegate controller can control via a power regulator or (e.g. internal or external DC-DC converter) the power supply voltage to part(s) or the whole SoC and thus solve the problem of leakage current. It is preferred that the power supply voltage is rather slowly falling and raising relative to the speed of the standby tasks. E.g. if the standby tasks are running at 1 MHz clock frequency then the power supply voltage should drop or rise gradually in about a few milliseconds. This measure prevents high currents drawn by the SoC at power on.

A second solution is moving the delegate µC and its tiny infrastructure to an external die but inside the same package. This external die is processed in a large CMOS IC process technology than mainstream, like for instance 0.25µm, which has negligible leakage current. The infrared decoder can be combined with a DC power switch, power regulator or DC-DC converter. The SoC is fully powered off in low-power standby mode.

A hybrid TV, a TV capable of receiving analog as well as digital TV standards, has in general four power modes of operation: Off, Low-power standby (or standby passive), Active standby, Running (system operational).

The low-power standby mode is characterized by preferably very low power consumption and the capability of waking up from a set of specific interrupts. These are for instance specific infrared commands (channel, standby or power-on key press), keypad on-key press, timer event, modern ring, and (user defined) external interrupts.

The TV active standby mode has different possibilities. When related to an analog broadcast TV set, all small signal functions are available. Hence, it is possible to activate for instance FM radio, to route SCART signals and to fetch VBI data. When related to hybrid TV, the task list is further extended with for instance MPEG transport stream (TS) monitoring for specific data or programs. Monitoring of the TS requires the additional tasks of demultiplexing, descrambling, software downloads, etc. It is obvious that the active standby mode is considerably less low power than low-power TV standby. The focus of the embodiment will be on the low-power standby mode.

Embodiments of the invention will now be described in relation to the drawings.

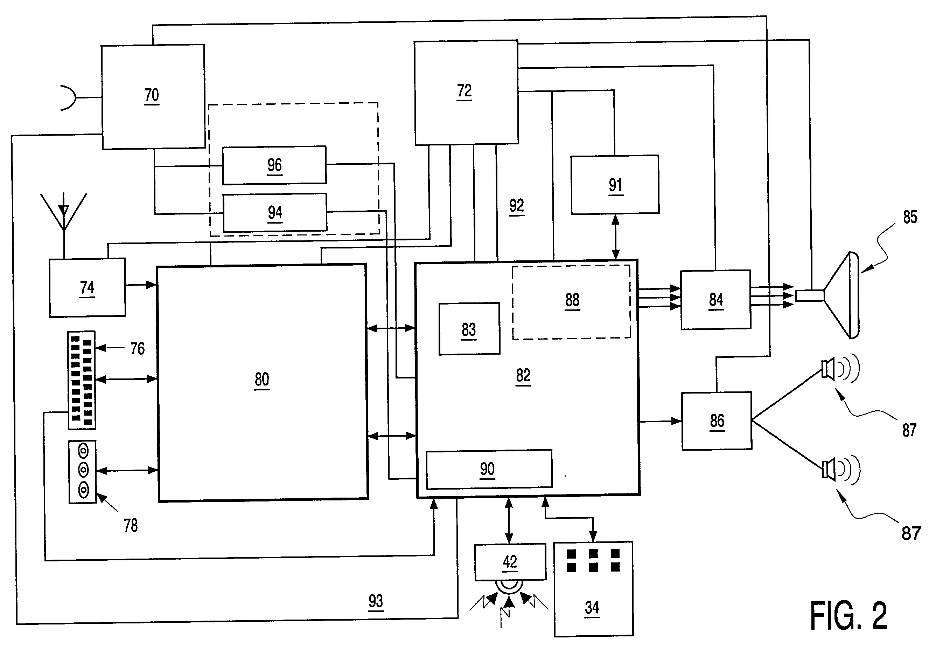

Fig. 2 presents a simplified block diagram of an extended TV system. The upper section shows a switched mode power supply (SMPS) 70 and an extra high tension (EHT) generator 72 providing all required power supply voltages. The middle section from left to right shows a tuner 74, SCART interface 76 and audio IO 78 connected to a multi-platform interface (MPIF) 80. The MPIF 80 takes care of IF processing of the tuner output, routing of SCART signals and SCART output buffers, audio and video baseband switching and AD conversion. The MPIF 80 interfaces to a digital one-chip TV IC 82. The digital one-chip TV IC 82 implements video decoding, memory based features (picture-in-picture/double window, scan-rate conversion, noise reductions, etc), picture improvements (CTI, LTI, color correction), digital output processing (DOP) 83 for CRT display adaptation (RGB processing, SCAVEM, deflection control), audio processing, VBI services, TV control (keypad, remote control, P50 commands, etc), and graphics. It connects to RGB and audio amplifiers 84, 86 supplying a screen 85 and speakers 87 respectively.

The digital one-chip TV IC 82 is a system-on-chip (SoC) that has next to its main TV micro-controller 88 an embedded delegate micro-controller 90 to deal with low-power standby tasks. The delegate micro-controller 90 in combination with a small part of the DOP 83 to generate the H-drive signal 92 for a line transistor (not shown) of the EHT circuit 72, has its own voltage domain(s) in the SoC 82. It is connected to the SMPS 70 standby supply via two DC-to-DC converters 94, 96 for delivering 1.8 Volt and 3.3 Volt respectively. Note that the 3.3 V supply voltage is required only for supplying the analog part in the (open drain) IC pad that connects to the line transistor (not shown) for compatibility. In low-power standby mode, only the delegate micro-controller 90 and a small part of the DOP 83 is powered by SMPS 70 standby supply via the two DC-to-DC converters 94 and 96, whereas the rest of the SoC 82 is not powered. The delegate controller 90 is very loosely coupled with the surrounding system-on-chip 82 so that it takes a minimum effort to give it its own voltage domain. The delegate micro-controller has a standby mode on/off line 93 (burst mode control) to the SMPS 70. The system-on-chip has a flash memory 91.

An example of a switch mode power supply (SMPS) 70 very suitable for TV and monitors is fully described in reference, J. Kleuskens, R. Kennis, "75W SMPS with TEA 1507 Quai-Resonant Flyback Controller", Application Note No. AN00047, Philips Semiconductors, 6 June 2000 and is hereby incorporated by reference herein. This SMPS 70 has frequency reduction at low power standby for improved system efficiency (power consumption <3 W) and burst mode operation for very low power standby levels (power consumption <1 W).

The SMPS 70 stabilizes its output voltage to the extra high tension (EHT) generator 72 to within a few percent. All other outputs of the SMPS 70 are not being individually stabilized so they are inherently less accurate and may deviate depending on load conditions. Before any output to the EHT generator 72, this output needs loading. If the output to the EHT generator 72 is not being loaded, a small amount of energy will keep up the voltage to this output. Other voltages will drop as soon as they are loaded or are deliberately kept low. When in low-power start-up mode, the H-drive 92 is being started up using only little power from the 3.3V supply 96 by a horizontal deflection generator (not shown) in the digital output processor (DOP) 83, which is controlled by the delegate controller 90. Typically, the delegate controller 90 will issue a signal or command to the horizontal deflection generator to initiate this start-up from low power. The start of the horizontal deflection automatically forms the load to the SMPS 70 supply voltage to the EHT generator 72 that is needed to make other outputs from the SMPS 70 available. Alternatively but not preferred, if low-power start-up cannot be adopted it is possible to first load the SMPS 70 supply voltage to EHT generator 72 with a load resistor to make more power available.

In low-power standby mode, about 10 mA will be available at the 5 V output. To achieve low-power standby mode the SMPS 70 is being operated in burst mode. Primary supply power will be less than 1 W. In this mode the 5 V stabilizer services to derive a proper DC voltage from a large-amplitude saw tooth. All other outputs will have a low voltage, but not necessarily equal zero. This low-power strategy only works if the SMPS 70 is defined for a power figure up to about 75 W. Beyond that value (typical in high-end applications with heavy sound amplifiers) separate low-power standby supplies are required.

The supply power for normal operation can be derived from the SMPS 70 or from the EHT generator 72. Since this voltage has been stabilized and due to the good magnetic coupling between primary and secondary windings of the EHT transformer 72 relatively well-stabilized supply voltages can be derived from the EHT transform using scan-rectifiers. Voltage stabilizers and supply switches (removing the power from specific parts of the ICs in low-power standby) may be omitted. If active standby mode is to be supported, supply power for normal operation must be derived from the SMPS 70.

Audio amplifiers may not be supplied via the EHT transformer 72, because the varying load would then modulate picture width. Typically, the 200 V supply for the RGB amplifiers 84 as well as focus and voltage grid 2 (VG2) voltages is derived from fly-back rectifiers (not shown) in the EHT circuit 72. Those voltages are not well stabilized (high internal resistance), depend on duty-cycle and online frequency, but allow high voltages to be generated with relatively low number of windings.

If the mains voltage is instantly removed due to power plug disconnect or mains switch, a voltage detector on the secondary (mains-separated) part of the SMPS 70 sets a logic level at the controller device. This is to signal that power will remain available only for a short period. Measures can be taken to switch off gracefully. Detection at the primary part would enable "early" detection, but its implementation will be more expensive due to galvanic isolation requirements.

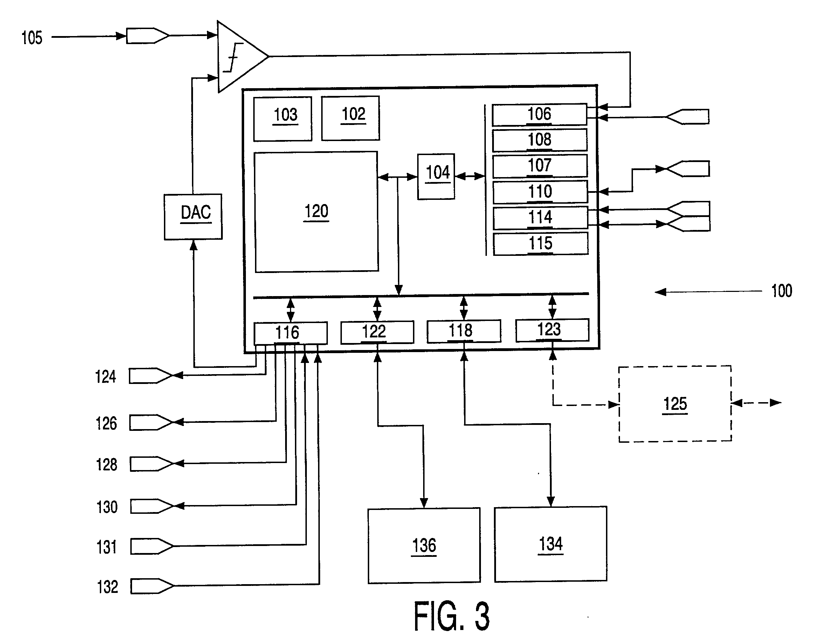

Fig. 3 shows an example of an embedded 80C51 micro-controller 100, which could serve as delegate micro-controller 90, with a number of (standard) peripherals that support TV standby tasks. A clock driver module 102 receives its input from a clock generator (not shown). Adjacent to the clock driver module 102 is a mode select module 103. It generates all clock signals and implements first reset circuitry of the SoC. The mode select sets the micro-controller 100 during reset in a certain operational or test mode. The 80C51 CPU (Intel compatible) interfaces via a special function register interface (SFRIF) 104 to a number of peripheral register modules described herein. An interrupt controller (INT) 106 can handle 4-15 interrupt sources with 2-4 priority levels. The INT controller 106 takes signals from a keypad input 105 and digital/analog converter DAC. Timer 0/1 (TIMER0/1) 107 implements two standard 16 bit timer/counters. PCON 108 is a configurable power control register for local power management like idle and sleep modes. I2C 110 is an 8-bit oriented master/slave function with configurable baud rate table and accommodates an I²C serial interface 112 to the surrounding system-on-chip and optional to the system off-chip. The programmable counter array (PCA) 114 has capture timers for remote control and P50 commands (pin 10 SCART) protocol. The PCA 114 also has timer/counter compare and a prescaler for implementing timer wake-up functionality. Watch dog timer 115 is located next to the PCA 114. Next to the SFRIF 104 peripherals, PORTS 116 include the logic to connect to the surrounding SoC or pads. The XRAMIF 118 is the interface between the 80C51 CPU 120 and on-chip data memory 134. The ROMIF 122 is the interface between the CPU 120 and the on-chip ROM/OT-ROM program memory 136. The optional HOSTIF 123 connects (asynchronous) systems 125 to an internal CPU bus.

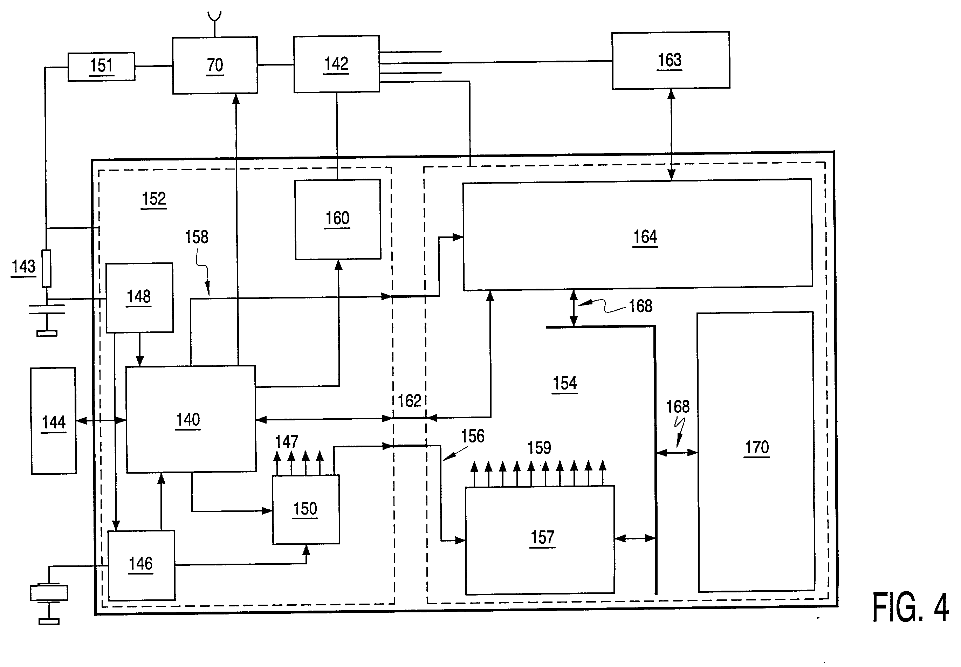

Ports interface 116 is used for interfacing input and output signals to the surrounding system. A first output 124 port is used to control a standby LED. A second output 126 port is used to control the SMPS' burst mode. A third port 128 controls the power manager or the TV main controller of the surrounding system. A fourth port 130 implements zero or more interrupt lines to the main TV micro-controller (see Fig. 4) for implementing an optional interrupt based communication protocol. A fifth port 131 receives the EHT power active input. A sixth port 132 is used as input for power failure detects.

Fig. 4 shows a one-chip TV IC with an embedded delegate micro-controller (dµC) 140 as described in the above section for standby tasks. Two power supply domains 152, 154 can be depicted for the SoC. The dµC 140 and its peripherals have a standby power supply domain 152 of 1.8 V. Most of the one-chip TV SoC is supplied by a 1.8 V power supply from an EHT generator 142. A power reset 148 connects to a low-pass filter 143. Low-pass filter 143 and a standby supply input of SoC connect to a first DC/DC converter 151, and DC/DC converter 151 connects to the standby supply of SMPS 70 having a mains supply. An infrared remote control receiver front-end 144 is connected to the dµC 140. The dµC 140 receives a binary remote control input signal from the infrared remote control receiver front-end 144 and optionally controls low power modes of this front-end. The dµC 140 takes care of the decoding of the binary remote control input signal into remote control commands. The dµC 140 is connected to a X-tal oscillator 146. At power up the X-tal oscillator 146 signals an internal power management unit of the dµC 140 that its oscillator output can be trusted (output is stable within its limits). The dµC 140 is further connected to a power and reset unit 148 that ensure stable reset state during power up. The dµC 140 is also connected to a clock distribution unit 150. The clock distribution unit 150 gets an input clock from the X-tal oscillator 146 and distributes at least one always clock eg 147. Optionally, this always clock can have its frequency altered, e.g. the always clock is set to a frequency of about 1 MHz in low power standby mode in order to save power and 13.5 MHz in operational mode (when power saving is less important). Next to the always clock one or more switchable clocks are supplied by the clock distribution unit 150 and controlled by the dµC 140. One of these switchable clocks, in this embodiment a switchable X-tal clock, is supplied at 156 to the other voltage domain 154 as master clock for power, clock and reset unit 157 for clock distribution at points 159. The dµC 140 has at least one reset line connection 158 to the SoC in the other voltage domain 154, which it controls. The dµC 140 controls the slow start/stop mode of an H-drive section 160 driving the EHT generator 142 for power generation and horizontal deflection of a CRT.

The dµC 140 is connected via an I2C bus 162 connection to a main TV micro-controller 164 in the other voltage domain 154. The TV main micro-controller 164 has a connection 168 to TV & audio 170 and power, clock and reset unit 157. Also, the TV main micro-controller 164 has a connection to non-volatile memory 163 receiving 3.3 V power from the EHT generator 142. The dµC 140 and the TV main micro-controller 164 can exchange data and control over this I2C interface 162. The dµC 140 also has a control line 166 to signal low-power standby mode (or burst mode on/off) to the SMPS 70.

The use of a delegate micro-controller 90, 100, 140 as described above provides significant advantages in relation to power consumption in standby mode, particularly from the point of view of reduced leakage and handling of incorrect signals from an IR device. The micro-controller being embedded is advantageous for power sharing etc, and its being next to a main TV controller also has power saving advantages. The control by the delegate micro-controller of both voltage and the clock is advantageous in allowing lower power consumption whilst still allowing IR signal verification.

The problem of an increased power consumption due to infrared remote control false alarm handling by a main TV controller is addressed by fully delegating the standby tasks to an ultra low power delegate micro-controller 140 with minimal local resources and having high performance, and many dissipating system parts disabled. In low power standby mode this delegate controller 140 validates autonomously a remote control command, a keypad press, a timer alarm, an external interrupt, etc. A TV system is powered up only when a command is valid, e.g. remote control channel, standby or power on key pressed, keypad on key pressed etc.

A second problem of power dissipation due to leakage currents in mainstream CMOS related to one chip TV concepts typically gets worse when systems-on-chip grow due to the continuation of Moore's Law. Leakage current is fast becoming a major component of power dissipation due to low threshold voltage transistors in CMOS circuits. The leakage current problem is reduced considerably by the delegate controller signaling a switched mode power supply (SMPS). The SMPS controls one or more power supply voltages to parts for the whole system-on-chip, including main controller and resources. High performance, leaking system parts are not only clock disabled but also powered down when the system is brought into low power standby modes. Hence leakage current can be reduced considerably in the system-on-chip.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. Low power standby circuitry comprising:
signal reception means (42);
means for decoding a signal received by the signal reception means;
a system-on-chip (82) incorporating a main micro-controller (88; 164); and
a delegate micro-controller (90; 140) for controlling a voltage supply to at least part of a system-on-chip (82) upon receipt of a validated signal.

2. Low power standby circuitry as claimed in claim 1, in which the delegate micro-controller (90) is operable to control the supply of at least one clock signal to said at least part of the system-on-chip (82).

3. Low power standby circuitry as claimed in claim 1, in which the delegate micro-controller (90; 140) is embedded in the system-on-chip (82).

4. Low power standby circuitry as claimed in claim 1, which is operable to reduce a frequency of a clock signal and/or reduce a voltage of a voltage supply and/or switch a voltage of a voltage supply to the system-on-chip on entering a standby mode.

5. Low power standby circuitry as claimed in claim 1, which is operable to enable or increase at least one clock frequency and/or increase or enable at least one voltage supply on ending a standby mode.

6. Low power standby circuitry as claimed in claim 7, which is operable to first reduce or disable a clock frequency before reducing or disabling at least one voltage supply on entering a standby mode.

7. Low power standby circuitry as claimed in claim 1, which receives input from at least one of the signal reception means; timing means; and power supply means.

8. Low power standby circuitry as claimed in claim 1, in which the delegate micro-controller (140) is located, in use, in a first voltage domain (152), separate from a second voltage domain (154) for the main micro-controller (164) of the system-on-chip.

9. An audiovisual device incorporating low power standby circuitry according to claim 1.
